Europäisches Patentamt

European Patent Office

Office européen des brevets

(19)

(11) **EP 1 308 744 B1**

(12) **EUROPÄISCHE PATENTSCHRIFT**

(45) Veröffentlichungstag und Bekanntmachung des Hinweises auf die Patenterteilung:
**27.07.2005 Patentblatt 2005/30**

(51) Int Cl.⁷: $G01S\ 3/808$, $G10K\ 11/34$

(21) Anmeldenummer: **02020286.7**

(22) Anmeldetag: **11.09.2002**

(54) **Verfahren zur passiven Ortung von schallabstrahlenden Zielen**

Method for passive position determination of sound emitting targets

Procédé de localisation passif des cibles rayonnants des ondes sonores

(84) Benannte Vertragsstaaten:
**AT BE BG CH CY CZ DE DK EE ES FI FR GB GR IE IT LI LU MC NL PT SE SK TR**

(30) Priorität: **30.10.2001 DE 10153444**

(43) Veröffentlichungstag der Anmeldung:
**07.05.2003 Patentblatt 2003/19**

(73) Patentinhaber: **ATLAS ELEKTRONIK GmbH**
**28305 Bremen (DE)**

(72) Erfinder:
• **Nirmaier, Thomas**
**69198 Schriesheim (DE)**
• **Wicker, Kai, Dr.**
**28357 Bremen (DE)**

(56) Entgegenhaltungen:
**EP-A- 0 288 374     EP-A- 0 962 784**
**US-A- 5 680 371**

**Beschreibung**

Die Erfindung betrifft ein Verfahren zur passiven Ortung von schallabstrahlenden Zielen der im Oberbegriff des Anspruchs 1 definierten Gattung.

Bei einem bekannten Verfahren dieser Art für eine linienförmige Wandleranordnung mit kontinuierlich belegten Wandlern (DE 198 25 271 C1) werden mittels einer mit den Wandlern verbundenen Peilanlage Ziele gepeilt und der Peilwinkel zu den Zielen bestimmt. Eine Anzahl von benachbarten Wandlern wird zu einer Gruppe zusammengefaßt, und aus den Empfangssignalen bzw. den elektrischen Ausgangssignalen der Wandler der Gruppe werden durch Laufzeit- und/oder Phasenverzögerungen Fokussignale mit Brenn- oder Fokalpunkten gebildet, die auf jedem eine Zielpeilung definierenden Peilstrahl hintereinander aufgereiht sind. Die Fokussignale werden miteinander verglichen und der Fokuspunkt des größten Fokussignals, der durch die Entfernung zur Wandleranordnung bestimmt ist, wird als Ort des Ziels auf dem Peilstrahl angegeben. Als Wandleranordnung wird dabei eine Schleppantenne oder ein sog. Flank-Array verwendet.

Um eine zusätzliche Beruhigung der Anzeige des Zielorts zu erreichen, werden mehrere Gruppen jeweils aus einer Anzahl von Wandlern zu benachbarten Teilbasen zusammengefaßt. Für jede Teilbasis werden Fokussignale mit längs des Peilstrahls in Peilrichtung zum Ziel hintereinander aufgereihten Brennpunkten gebildet. Für jede Teilbasis werden die Fokussignale miteinander verglichen, und aus den Brennpunkten der größten Fokussignale aller Teilbasen werden auf dem zugehörigen Peilstrahl Radialabstände zum Ziel ermittelt. Durch Bilden des Mittelwerts der Radialabstände wird der Ort des Ziels in Peilrichtung bestimmt.

Der Erfindung liegt die Aufgabe zugrunde, ein Verfahren der eingangs genannten Art so zu verbessern, daß es bei niedrigen Signal-Rausch-Verhältnissen noch gute Schätzungen der Ortungsparameter liefert.

Die Aufgabe ist erfindungsgemäß durch die Merkmale im Anspruch 1 gelöst.

Das erfindungsgemäße Verfahren hat den Vorteil, daß durch das Heranziehen des Kehrwerts der Entfernung, der gleich der Krümmung der an der Wandleranordnung einfallenden Wellenfront ist, die Ausgangssignale der Wandler statistisch ausgewertet werden können. Die Nutzung der statistischen Natur der Meßgrößen ermöglicht noch bei schlechten Signal-Rausch-Bedingungen im Vergleich zu den bekannten Verfahren gute Schätzungen der Meßgrößen. Damit ist verbunden, daß eine gute Genauigkeit der Ortungsergebnisse sehr viel schneller erreicht wird, wobei die Zeitspanne zum Erreichen der gewünschten Genauigkeit insbesondere von der Länge oder Apertur der Wandleranordnung und dem Nutz/Stör-Verhältnis (Signal-Noise-Ratio, SNR) abhängt. Eigene Manöver oder Zielmanöver sind nicht erforderlich. Mit dem erfindungsgemäßen Verfahren kann die Effizienz von Aufklärungsaufgaben wesentlich verbessert werden. Schon nach Durchführen einer ersten Peilung und entsprechender Fokussierung längs des Peilstrahls wird eine erste angenäherte Schätzung des Zielorts in wenigen Sekunden herbeigeführt. Ein erstes zuverlässiges Ergebnis vom Zielort erhält man bereits nach mehreren Schätzungen. Hierzu sind weder eigene Manöver, noch Manöver des Ziel erforderlich.

Das erfindungsgemäße Verfahren ist aufgrund seiner kurzen Integrationszeit relativ unempfindlich gegen niedrige zeitliche Kohärenzlängen und durch eine nahezu kontinuierliche Abtastung der Wellenfront durch die dichte Wandlerbelegung auch unempfindlich gegen niedrige räumliche Kohärenzlängen. Die geringen Anforderungen an die Kohärenz der Schallausbreitung bringen den Vorteil, daß das Verfahren robust gegen eine Reihe von Störungen ist, die durch komplexe Schallausbreitungsbedingungen, z.B. Mehrwegeausbreitung, Temperaturgradienten, Bildung von Schallkanälen und Wasserschichtungen, hervorgerufen werden. Die Fertigung der Wandleranordnung ist sehr einfach, da die Genauigkeit der Erfassung der Wandlerpositionen, wie sie bei einer Entfernungsbestimmung durch Korrelation von Empfangssignalen dreier Wandler oder Wandlergruppen gestellt werden (US 4 910 719), bei dem erfindungsgemäßen Verfahren nicht notwendig sind, weil nicht nur drei, sondern viele Punkte auf der empfangenen Wellenfront zur Berechnung der Zielentfernung herangezogen werden.

Bei dem erfindungsgemäßen Verfahren wird vorzugsweise die gesamte Länge der Wandleranordnung zum Bilden der Fokalpunkte genutzt, eine Unterteilung der vorhandenen Wandler in einzelne Wandlergruppen unterbleibt. Die dadurch erzielte Bündelung der von den Fokussignalen gebildeten Fokalpunkte bringt den Vorteil einer zusätzlichen Störunterdrückung, so daß insbesondere benachbarte Ziele das Meßergebnis nicht beeinträchtigen.

Darüber hinaus werden Ziele bei schlechtem Nutz/Stör-Verhältnis der Fokussignale besser detektiert, da durch die Bildung des Pegelverlaufs über dem Kehrwert der Entfernung sich Pegelmaxima deutlich ausprägen und auch solche Ziele im Pegelverlauf sicher zu erkennen sind. Das erfindungsgemäße Verfahren zeichnet sich durch die Möglichkeit einer exakten Zieltrennung und Zielortung aus, auch dann, wenn zwei unterschiedlich laute Ziele auf benachbarten Peilstrahlen durch die Wandleranordnung erfaßt werden.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß einer bevorzugten Ausführungsform der Erfindung werden die Fokalpunkte, auf welche die Wandleranordnung längs der Peilstrahlen fokussiert wird, im Bereich positiver und negativer Krümmungen der Wellenfront gebildet, wozu die Fokalpunkte auch für als Hilfsgröße eingeführte nicht reale Entfernungen zur Wandleranordnung angenommen werden. Diese nicht realen Entfernungen entsprechen negativen Krümmungen der Wellenfront, die aufgrund der statischen Natur der Messung bei niedrigem SNR auftreten und zu einer erwartungstreuen Schätzung der Zielentfernung berücksichtigt werden müssen. Der mit den gebildeten Fokalpunkten abgedeckte Entfernungsbereich wird dabei größer als + $R_{min}$ und kleiner - $R_{min}$ gewält, wobei $R_{min}$ eine zugelassene Mindestentfernung von der Wandleranordnung ist. Der unendlich großen Entfernung, bei der eine ebene Wellenfront empfangen wird und der Fokuspunkt im Unendlichen liegt, wird damit der Krümmungswert der Wellenfront bzw. der Entfernungskehrwert Null zugeordnet. Die Mindestentfernung bestimmt die maximale positive und negative Krümmung und damit den Wertebereich des Entfernungskehrwerts. Durch diese Maßnahme erhält man eine symmetrische Kurve des Pegelverlaufs im Bereich eines Pegelmaximums, aus der sich der Entfernungskehrwert beim Maximum, der die Zielentfernung liefert, sehr viel genauer bestimmen läßt, z.B. durch Näherung der Umgebung des Maximums an eine Parabel und Bestimmen des Scheitelpunkts dieser Parabel. Damit lassen sich auch relativ flach ausgeprägte Maxima, die auf leisen oder weit entfernten Schallquellen basieren, detektieren und genau orten.

Gemäß einer vorteilhaften Ausführungsform der Erfindung wird die Fokussierung der Wandleranordnung nur auf solche Fokalpunkte vorgenommen, die auf bereits als Zielpeilungen erkannten Peilstrahlen liegen. Hierzu muß die Wandleranordnung ausschließlich noch auf die diesen Zielpeilungen entsprechenden wenigen Peilstrahlen fokussiert werden, wodurch sich der Rechenaufwand und die Rechenzeit erheblich reduziert. Die Zielpeilungen werden in herkömmlicher Weise mittels einer Peilanlage ermittelt, indem für jede Peilrichtung im Empfangssektor der Wandleranordnung eine Richtcharakteristik mit der Wandleranordnung gebildet wird. Durch geeignete Phasen- und/oder Zeitverzögerungen der elektrischen Ausgangssignale der Wandler und konphase Addition der verzögerten Ausgangssignale werden Gruppensignale der Richtcharakteristiken gebildet. Gruppensignale mit signifikantem Pegel liefern Peilstrahlen mit Zielpeilungen. Sind die Zielpeilungen bekannt und ggf. verifiziert, so muß lediglich noch die Entfernung der detektierten Ziele auf den unterschiedlichen Peilstrahlen ermittelt werden.

Gemäß einer vorteilhaften Ausführungsform der Erfindung wird in jedem Pegelverlauf als Funktion des Entfernungskehrwerts der Gradient der Funktion durch Bildung der ersten Ableitung des Pegelverlaufs und die Krümmung der Funktion durch Bildung der zweiten Ableitung des Pegelverlaufs jeweils nach dem Entfernungskehrwert ermittelt. Derjenige Pegelwert, bei dem der Gradient Null und die Krümmung negativ ist, kennzeichnet das Pegelmaximum auf dem Peilstrahl. Der dem Pegelmaximum zugehörige Entfernungskehrwert wird nach Kehrwertbildung als Zielentfernung angegeben. Diese Art der Bestimmung der Zielentfernung ist genau bei einfallenden Schallsignalen, die ein ausreichendes SNR aufweisen.

Sind hingegen die von der Wandleranordnung empfangenen Schallsignale stark gestört, so daß Ausreißer bei der Bestimmung des Entfernungskehrwerts vermehrt auftreten, so werden gemäß einer vorteilhaften Ausführungsform der Erfindung die dem Pegelmaximum zugehörigen Entfernungskehrwerte einer statistischen Filterung unterzogen, wobei das benutzte Filter erwartungstreu ist und eine minimale Varianz aufweist. Vorteilhaft wird hierzu ein laufendes Medianfilter, ein sog. Running Median, verwendet. Das Filter liefert einen Schätzwert für den Entfernungskehrwert des Pegelmaximums, der nach Kehrwertbildung einen Schätzwert der Zielentfernung liefert. Alternativ können auch die Bildung von Mittelwert und Standardabweichung zur Filterung eingesetzt werden, doch verbessert das Medianfilter entscheidend die Schätzfunktion.

Die Bestimmung des Entfernungskehrwerts ist aufgrund eines dem Nutzanteil des Fokussignals überlagerten Rauschens mit einem statistischen Fehler behaftet. Das entfernungsabhängige Fokussignal wird für unterschiedlichen Entfernungen jeweils durch eine Summe von verzögerten Ausgangs- oder Empfangssignalen der Wandler der Wandleranordnung gebildet. Der entfernungsabhängige Pegelverlauf des Fokussignals ist eine Summe aus Cosinusfunktionen, die über eine Reihenentwicklung für kleine Argumente des Cosinus eine quadratische Abhängigkeit vom Entfernungskehrwert zeigt

$$P(R^{-1}) \; = \; P_0\left[1 \, - \, \frac{\pi^2 f^2 L^4}{80 c^2} \; \frac{1}{R^2}\right] \qquad\qquad\qquad\qquad \text{I}$$

dabei ist $P_0$ die Amplitude des Fokussignals $P(R^{-1})$, R der Entfernungswert, f die Frequenz, L die Länge der Wandleranordnung und c die Schallgeschwindigkeit. Die zum Bilden des Pegelverlaufs verwendete Integrationszeit ist endlich, so daß der Amplitude $P_0$ des Pegelverlaufs eine Rauschamplitude überlagert ist, die einen statistischen Fehler in der Bestimmung der Abszisse des Pegelmaximums und somit bei der Bestimmung des Entfernungskehrwerts erzeugt.

Da die Entfernung erfindungsgemäß über den Entfernungskehrwert bestimmt wird, wird dieser Fehler im quadratischen Term des Entfernungskehrwerts berücksichtigt. Das Fokussignal kann im Fernfeld durch ein Polynom zweiter Ordnung angenähert werden, wenn der Entfernungskehrwert $R^{-1}$ durch die Krümmung K ersetzt wird. Dadurch bestimmt sich das mit einer Rauschamplitude überlagerte Fokussignal wie folgt:

$$P(K) = P_0 \left[ 1 - a(K - K_0)^2 \right] \qquad\qquad II$$

mit $a = \dfrac{\pi f^2 L^2}{80 c^2}$, dabei ist $K - K_0$ die durch das Rauschen verursachte Störung der Krümmung der Wellenfront, also der statistische Fehler $\Delta K$ der Krümmung. Setzt man für $K - K_0 = \Delta K$, so erhält man nach Umformung

$$P(K) - P_0 = P_0\, a\, (K - K_0)^2 \qquad\qquad III$$

$$\Delta P = P_0\, a\, \Delta K^2, \qquad\qquad IV$$

wobei $\Delta P = P(K) - P_0$ die statistische Störung des Fokussignals angibt. Löst man Gleichung IV nach $\Delta K^2$ auf, so erhält man

$$\Delta K^2 = \frac{1}{a\dfrac{P_0}{\Delta P}}, \qquad\qquad V$$

dabei ist $P_0/\Delta P$ das Nutz/Störverhältnis $SNR_B$ des Fokussignals.

Der Fehler $\Delta K$ der Krümmung ist also gleich

$$\Delta K = \frac{1}{\sqrt{a\, SNR_B}} \qquad\qquad VI$$

mit $K = R^{-1}$ und der Annahme, daß $R_0$ die tatsächliche Entfernung und $R$ die fehlerbehaftet ermittelte Entfernung ist, erhält man die Störung der Krümmung

$$\Delta K = K - K_0 = \frac{1}{R} - \frac{1}{R_0} = \frac{R_0 - R}{R_0 R} \qquad\qquad VII$$

Für $\Delta R = R_0 - R$ ist der relative statistische Fehler der Entfernung gleich

$$\frac{\Delta R}{R} = \frac{4\sqrt{5}\, c}{\pi f L^2 \sqrt{SNR_B}}\, R \qquad\qquad VIII$$

Der relative statistische Fehler des Entfernungswerts ist eine Funktion der Entfernung, die mit steigender Frequenz fällt und umgekehrt proportional dem radizierten Nutz/Störverhältnis des Fokussignals ist, das ebenfalls frequenzabhängig ist.

Versuche haben gezeigt, daß bei einem gemessenen Nutz/Störverhältnis des Fokussignals eine Voraussage über den Verlauf des relativen statistischen Fehlers der Entfernung $\Delta R/R$ über der Frequenz getroffen werden kann, so daß bestimmte Frequenzbereiche zur Optimierung des Ortungsverfahrens bei der vorliegenden Schallausbreitungssituation ausgeschlossen werden können, ohne daß besondere Kenntnisse über das "Sonarwetter" erforderlich sind. Mit dieser Weiterbildung des erfindungsgemäßen Verfahrens ist es außerdem möglich, Entfernungsbereiche unberücksichtigt zu lassen, wenn dort der statistische Fehler $\Delta R/R$ über einer vorgegebenen Größe liegt.

Das Nutz/Störverhältnis des Fokussignals kann aus dem Spektrum des Fokussignals, das das Ziel enthält, und Spektren von Fokussignalen benachbarter Fokalpunkte, in denen kein Ziel enthalten ist und die einen geringen Abstand zum Ziel aufweisen, bei nicht zu großer räumlicher Anisotropie des Rauschen geschätzt werden. Mit diesem Nutz/Störverhältnis wird der relative statistische Fehler der Entfernung berechnet.

Nach der vorteilhaften Weiterbildung der Erfindung ist das Nutz/Störverhältnis des Fokussignals besonders einfach aus dem Nutz/Störverhältnis eines der Emfangssignale der Wandler unter Berücksichtigung eines vorgebbaren Zeit-Bandbreite-Produkts zu berechnen. Zusammen mit der effektiven, peilwinkelabhängigen Länge der Apertur und der Anzahl der Wandler ist damit der relative statistische Fehler mit einer Auswertung des Spektrums nur eines einzigen Empfangssignals möglich.

Besonders vorteilhaft ist es, schon vor der Richtungsbildung und Fokussierung die Empfangssignale der Wandler einer Frequenzanalyse zuzuführen, so daß der Pegelverlauf der Fokussignale als Funktion des Peilwinkels, des Entfernungskehrwerts und der Frequenz dargestellt werden kann. Abhängig vom ermittelten relativen statistischen Fehler der Entfernung wird der Pegelverlauf nur für solche Frequenzbänder ermittelt und ausgewertet, für die der Fehler unterhalb einer vorgebbaren Fehlergrenze liegt. Durch diese frequenzabhängige Vorauswahl liefern auch stark verrauschte Empfangssignale mit einem Nutz/Störverhältnis von z.B. -20 dB Fokussignale mit einem auswertbaren Pegelverlauf, auch dann, wenn auf eine Vorauswahl von Zielpeilungen verzichtet werden muß.

Eine vorteilhafte Ausführungsform der Erfindung sieht vor, daß die Fokussierung der Wandler auf alle Fokalpunkte vorgenommen wird, die auf um diskrete Peilwinkel gegeneinander versetzte, den Empfangssektor rasterartig abdeckende Peilstrahlen liegen. Für jeden Peilstrahl werden zusätzlich die Pegel der Fokussignale in Abhängigkeit von den Peilwinkeln bestimmt. Neben dem Pegelverlauf als Funktion des Entfernungskehrwerts wird auch der Pegelverlauf als Funktion des Peilwinkels gebildet. Im Pegelverlauf als Funktion des Peilwinkels werden Maxima detektiert und aus den zugehörigen Entfernungskehrwerten werden die Zielentfernungen geschätzt. Bei dieser weiteren Ausgestaltung des Verfahrens werden die Fokussignale für ein Raster aus Peilwinkeln und Entfernungskehrwerten bestimmt, so daß der Empfangssektor nach Zielen durchsucht werden kann, die akustische Energie abstrahlen. Wie bei dem Pegelverlauf als Funktion des Entfernungskehrwerts können die Maxima im Pegelverlauf als Funktion des Peilwinkels durch Berechnung des Gradienten und der Krümmung des Pegelverlaufs bestimmt werden. Diejenigen Pegelwerte bei denen der Gradient Null und die Krümmung negativ ist, werden als Maxima definiert. Die den Maxima zugehörigen Peilwinkel werden als Zielpeilungen angegeben.

Gemäß einer weiteren vorteilhaften Ausführungsform der Erfindung wird bevorzugt der Pegelverlauf im Empfangssektor als zweidimensionale Funktion des Entfernungskehrwerts und des Peilwinkels bestimmt und zur Maximadetektion Gradient und Krümmung durch partielle Differentiation der zweidimensionalen Funktion nach dem Entfernungskehrwert und dem Peilwinkel berechnet. Der Vorteil dieser Signalverarbeitung besteht darin, daß Ziele auf benachbarten Peilstrahlen sicher getrennt und geortet werden, und zwar auch dann, wenn ihre Empfangspegel sehr unterschiedlich sind.

Wenn außerdem das Nutz- zu Störverhältnis der Empfangssignale der Wandler, mit denen der Pegelverlauf ermittelt wird, nur sehr gering ist, so daß Nutzsignale eines Ziels kaum im Rauschen detektiert werden können und/ oder Ziele in benachbarten Peilstrahlen oder Entfernungen sehr unterschiedlich hohe Schallenergie abstrahlen, kann trotzdem nach der vorteilhaften Ausführungsform der Erfindung eine Lageaufklärung durchgeführt werden, nachdem der relative statistische Fehler der Entfernung über der Frequenz ermittelt wurde. Abhängig vom Verlauf dieses relativen statistischen Fehlers werden die Empfangssignale in Frequenzbänder aufgeteilt, für die der Fehler unter einer vorgebbaren Fehlergrenze liegt. Jetzt besteht auch die Möglichkeit, ein frequenzselektiv hoch auflösendes Verfahren für die Richtungsbildung und Fokussierung einzusetzten, bei dem durch Schätzen der Kovarianzmatrix der Pegelverlauf in Abhängigkeit vom Peilwinkel und vom Entfernungskehrwert ermittelt wird. Ein solches Verfahren ist beispielsweise in dem Aufsatz von J. Capon "High Resolution Frequency Wave Number Spectrum Analysis", Proc. IEEE vol. 57, pp. 1408-18, 1969 beschrieben. Erfolgt die Richtungsbildung und Fokussierung im Frequenzbereich aus dem komplexen Frequenzspektren der Empfangssignale, so erhält man den Pegelverlauf durch Schätzen der Kreuzleistungsdichte-Matrix. Ein solches Verfahren ist beispielsweise in dem Buch "Sonsor Array Signal Processing", Prabhakar S. Naidu, CRC Press, 2001, Chapter 4 dargestellt.

Mit dieser Ausführungsform der Erfindung ist eine Zielortung und Trennung auch bei geringem Nutz/Störverhältnis, geringer Kohärenzlänge durch Störungen im Ausbreitungsmedium und bei komplexen Schallausbreitungsbedingungen, z.B. Mehrwegeausbreitungen, möglich.

Gemäß einer vorteilhaften Ausführungsform der Erfindung wird durch Rechnersimulation als Musterverteilung eine zweidimensionale Funktion in Abhängigkeit von Entfernungskehrwert und Peilwinkel für eine oder mehrere Ziele berechnet, und diese Musterverteilung wird mit der für den Empfangssektor bestimmten zweidimensionalen Funktion des Pegelverlaufs durch Faltung verglichen. Dadurch werden Maxima, die durch Empfang von Nachhall in benachbarten Peilstrahlen einen schrägen Verlauf über dem Emfangskehrwert und Peilwinkel erzeugen, unterdrückt und nicht bei der Zielerkennung erfaßt, was erwünscht ist, da ein Pegel der bei verschiedenen Entfernungen und unterschiedlichen Peilwinkeln auftaucht, nicht einem realen Ziel entsprechen kann. Der Vorteil besteht darin, daß eine Störbefreiung erreicht wird, wobei jedoch benachbarte Ziele nach wie vor erkannt und getrennt geortet werden.

In einer weiteren Ausführungsform der Erfindung wird in der zweidimensionalen Musterverteilung und in dem zweidimensionalen Pegelverlauf jeweils die Krümmung berechnet, und die Krümmungen von Pegelverlauf und Musterverteilung werden gefaltet. In dem Faltungsintegral werden dann vorhandene Peaks detektiert. Die den Peaks zugeordneten Werte von Entfernungskehrwert und Peilwinkel werden zur Ortsbestimmung des Ziels herangezogen. Zur Berechnung der Krümmungen wird auf die Funktion des Pegelverlaufs und auf die Funktion der Musterverteilung der Laplace-Operator angewendet.

Sind die von den Wandlern der Wandleranordnung aufgenommen Schallsignale stark verrauscht, weisen also ein sehr kleines SNR auf, so werden die den Peaks zugehörigen Entfernungskehrwerte ebenfalls einer gleichen statistischen Filterung unterzogen, wie sie vorstehend bereits angegeben ist. Hierbei wird vorzugsweise der Median der den Peaks zugehörigen Entfernungskehrwerte aus einer festgelegten Anzahl von letzten Messungen gebildet. Die Zielentfernung ist dann der Kehrwert des Medians. Zusätzlich wird ein Konfidenzintervall aus dem Median des Betrags der absoluten Abweichung von dem bei der Schätzung gebildeten Median gebildet. Bei zusätzlicher Auswahl eines optimalen Frequenzbandes für die Ermittlung des Pegelverlaufs läßt sich die Varianz bei die Bestimmung der Zielentfernungen noch weiter reduzieren.

Die Erfindung ist anhand eines in der Zeichnung illustrierten Ausführungsbeispiels im folgenden näher beschrieben. Es zeigen:

Fig. 1    ein Blockschaltbild einer Schaltungsanordnung zur Erläuterung des Verfahrens zur passiven Zielortung,

Fig. 2    eine Filteranordnung zum Einfügen in das Blockschaltbild gemäß Fig. 1,

Fig. 3    ein Spektrum des Nutz/Störverhältnisses,

Fig. 4    einen Verlauf eines frequenzabhängignen relativen statistischen Fehlers der Entfernung

Fig. 5    eine gleiche Darstellung eines Blockschaltbildes wie in Fig. 1 für ein modifiziertes Verfahren,

Fig. 6    ein Diagramm des Pegels von in der Schaltungsanordnung gemäß Fig. 1 gebildeten Fokussignalen als Funktion des Kehrwerts der Entfernung von auf einem Peilstrahl liegenden Fokalpunkten von der Wandleranordnung,

Fig. 7    ein Diagramm des zweidimensionalen Verlaufs des Pegels der in der Schaltungsanordnung gemäß Fig. 5 gebildeten Fokussignale in Abhängigkeit von dem Kehrwert der Entfernung von im Empfangssektor gebildeten Fokalpunkten von der Wandleranordnung und in Abhängigkeit von dem Peilwinkel der Fokalpunkte,

Fig. 8    einen Schnitt des Diagramms in Fig. 7 bei $R^{-1}=0$,

Fig. 9    ein Diagramm des Pegelverlaufs in Fig. 8 nach Faltung der Krümmung des Pegelverlaufs in Fig. 5 mit der Krümmung einer Musterverteilung,

Fig. 10   die mathematische Herleitung der Zeitverzögerung für die Ausgangssignale der Wandler zum Fokussieren der Wandleranordnung auf einen Fokalpunkt in der Entfernung $R_k$ von der Wandleranordnung.

Bei dem nachfolgend beschriebenen Verfahren zur passiven Ortung von schallabstrahlenden Zielen wird eine Wandleranordnung 10, auch Empfangsantenne genannt, mit voneinander beabstandeten, elektroakustischen Wandlern 11 verwendet. Im Ausführungsbeispiel ist die Wandleranordnung 10 eine Linearantenne mit einer Vielzahl von äquidistant aneinandergereihten Wandlern 11, wie sie z.B. als Schleppantenne (Towed-Array) oder als am Bootskörper befestigte Seitenantenne (Flank-Array), mitunter auch als Bordwandstreamer bezeichnet, bekannt ist. Mit der Wandleranordnung 10 wird ein Empfangssektor aufgespannt, innerhalb dessen einfallender Schall, der von Schallquellen bildenden Zielen abgestrahlt wird und sich im Wasser ausbreitet, von den Wandlern 11 empfangen wird. Die Wandler 11 sind in herkömmlicher Weise mit einer Peilanlage 13 verbunden, in welcher anhand der elektrischen Ausgangssignale der Wandler 11 - im folgenden Empfangssignale genannt - die Einfallsrichtung des Schalls und damit die Peilrichtung zu den Zielen bestimmt wird. Die Peilanlage 13 umfaßt in bekannter Weise einen Richtungsbildner 14, einen Signalverarbeitungblock 15 und einen Pegeldetektor 16. Im Richtungsbildner 14 werden in bekannter Weise die Empfangssignale der Wandler 11 zeit- und/oder phasenverzögert, und zwar derart, daß unter Berücksichtigung der gewünschten Einfalls- oder Peilrichtung $\theta_j$ alle Empfangssignale der Wandler 11 konphas sind. Im Signalverarbeitungblock 15 werden die in jeder Peilrichtung erhaltenen konphasen Empfangssignale zu einem Gruppensignal addiert, und das Pegelsignal des Gruppensignals wird in Zuordnung zu der Einfalls- oder Peilrichtung $\theta_j$ abgelegt. Der Pegeldetektor 16 ermittelt die größten Pegelsignal und gibt die den größten Pegelsignalen der Gruppensignale zugeordneten Peilwinkel $\theta_z$ als Zielpeilungen aus, die einer Anzeigevorrichtung 17 zugeführt und in dieser numerisch und graphisch dargestellt werden.

Zur Bestimmung der Entfernung eines unter einer Zielpeilung $\theta_z$ erfaßten Ziels werden die Empfangssignale, also wiederum die elektrischen Ausgangssignale der Wandler 11, einem sog. fokussierenden Beamformer 18 zugeführt. In diesem Beamformer 18 werden die Empfangssignale der Wandler 11 durch definierte Zeit- und/oder Phasenverzögerungen auf Fokalpunkte fokussiert, die auf einem durch den Peilwinkel $\theta_z$ festgelegten Peilstrahl 19 hintereinander gereiht sind und um diskrete Entfernungsstufen zur Mitte der Wandleranordnung 11 radial versetzt sind.

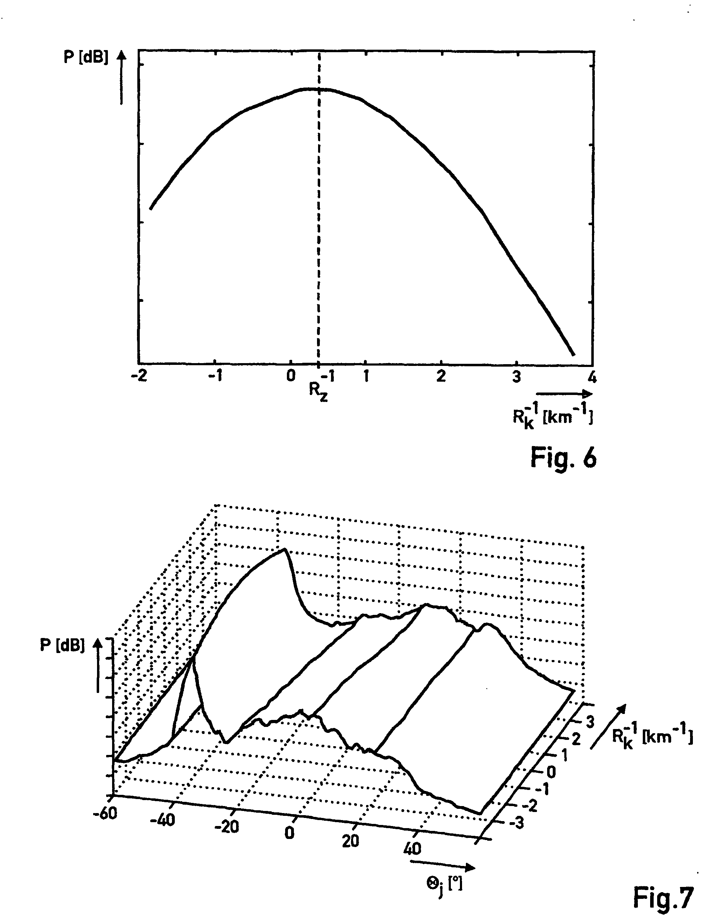

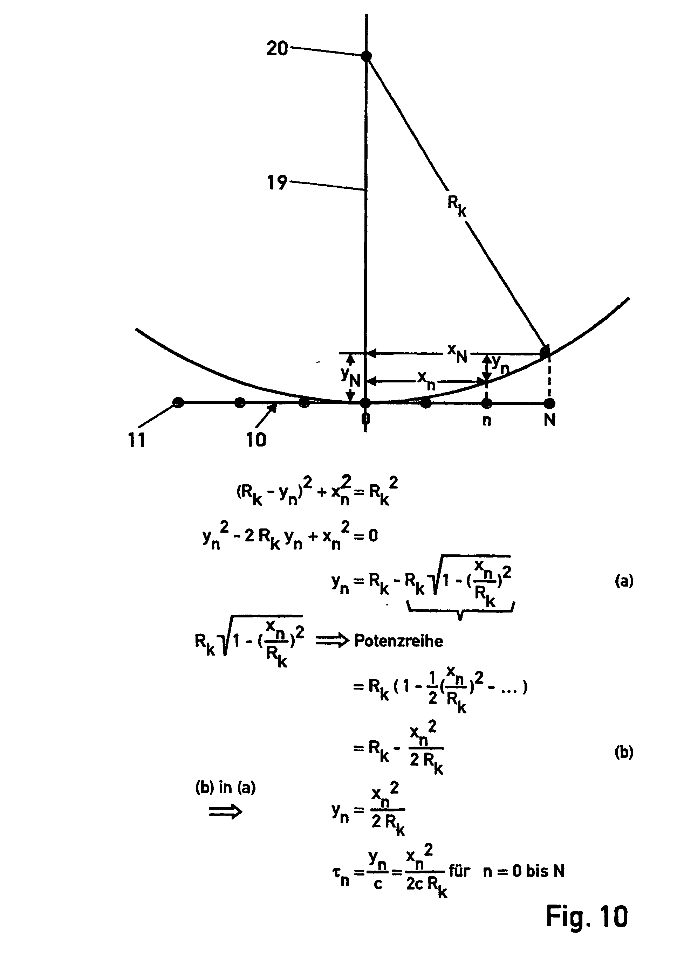

Die Berechnung der erforderlichen Zeitverzögerungen zur Fokussierung der Wandleranordnung 10 auf einen auf dem Peilstrahl 19 liegenden Fokalpunkt 20 ist in Fig. 10 angegeben. Dabei befindet sich der Fokalpunkt 20 in einer Entfernung $R_k$ von der Mitte der Wandleranordnung 10, und die Wandleranordnung 10 ist als Linear-Array mit 2N äquidistant angeordneten Wandlern 11 ausgeführt. Die Zeitverzögerungen für die Empfangssignale der n Wandler 11 werden aus den Laufzeiten für die Abstände $y_n$ der n Wandler 11 von einem um den Fokalpunkt 20 gezogenen Kreisbogen, dessen Tangente den Mittelpunkt der Wandleranordnung 10 berührt, gewonnen. $x_n$ ist dabei der Abstand des n-ten Wandlers 11 von dem Mittelpunkt der Wandleranordnung 10, und c ist die Schallgeschwindigkeit. Für jeden Fokalpunkt 20 wird die für einen Wandler 11 erforderliche Zeitverzögerung $\tau_n$ gemäß der in Fig. 7 abgeleiteten Gleichung:

$$\tau_n = \frac{x_n^2}{2cR_k} \tag{1}$$

berechnet. Dabei ist $\frac{1}{R_k} = R_k^{-1}$ der Entfernungskehrwert und entspricht der Krümmung der empfangenen Wellenfront.

Von dieser Verzögerung $\tau_n$ wird die sich ergebende maximale Zeitverzögerung $\tau_N$ abgezogen, so daß die für den n-ten Wandler 11 tatsächlich erforderliche Verzögerungszeit sich berechnet zu

$$\Delta \tau_n = \frac{1}{2cR_k} (x_n^2 - x_N^2) \tag{2},$$

wobei $x_n$ der Abstand des n-ten Wandlers und $x_N$ der Abstand des äußersten Wandlers 11 jeweils von dem Mittelpunkt der Wandleranordnung 10 ist.

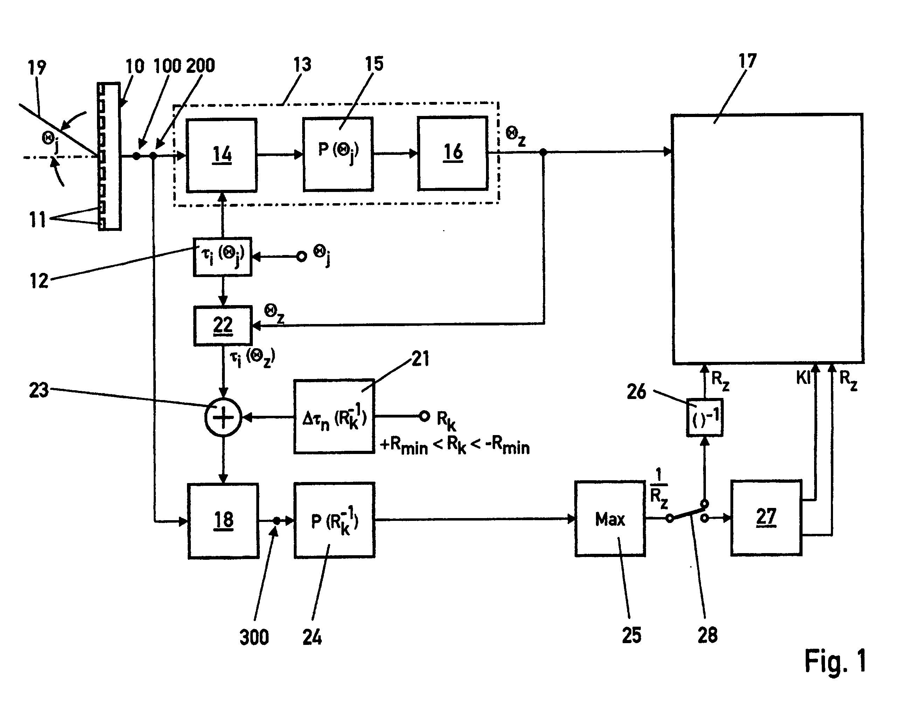

Die Berechnung der Verzögerungszeit $\Delta\tau_n$ in Abhängigkeit vom Entfernungskehrwert $R_k^{-1}$ erfolgt in dem Verzögerungszeitrechner 21 (Fig. 1) und zwar für eine Vielzahl von Fokalpunkten 20 auf dem Peilstrahl 19. Dabei werden als Hilfgrößen nicht reale, negative Entfernungen eingeführt, die negativen Krümmungen der Wellenfront entsprechen, die aufgrund der statischen Natur der Empfangssignale auftreten und bei einer erwartungstreuen Schätzung berücksichtigt werden müssen. Der mit den angenommenen Fokalpunkten 20 abgedeckte Bereich für den Entfernungskehrwert schließt den Nahbereich zwischen + $R_{min}$ und - $R_{min}$ aus, wobei $R_{min}$ eine zugelassene Mindestentfernung von der Wandleranordnung 10 ist, in der eine Ortung sinnvoll ist. Für einen betragsmäßig gleichen Entfernungskehrwert $R_k^{-1}$ also für gleiche positive und negative Krümmungen ergeben sich Verzögerungszeiten $\Delta\tau_n(R_k^{-1})$, die betragsmäßig gleich sind und sich lediglich durch das Vorzeichen unterscheiden.

Zur Berücksichtigung des Peilwinkels $\theta_j$ des Peilstrahls 19 müssen die Empfangssignale der Wandler 11 noch um die sich aus dem Einfalls- oder Peilwinkel $\theta_j$ ergebenden Verzögerungszeiten $\tau_i$ verändert werden. Der Verzögerungszeitrechner 12 der Peilanlage 13 ist hierzu an eine Torschaltung 22 gelegt, die von der Peilanlage 13 gesteuert wird und nur diejenigen Verzögerungszeiten $\tau_i$ hindurchläßt, die eine solche Verzögerung der Empfangssignale der Wandler 11 herbeiführt, daß der Peilstrahl 19 unter einem Schwenkwinkel liegt, der der Zielpeilung $\theta_z$ entspricht. In einem Summierglied 23 werden die Verzögerungszeiten $\tau_i(\theta_z)$ aus dem Verzögerungszeitrechner 21 mit dem Verzögerungszeiten $\Delta\tau_n(R_k^{-1})$ aus dem Verzögerungszeitrechner 12 in richtiger Zuordnung zu den einzelnen Wandlern 11 der Wandleranordnung 10 addiert, und die sich ergebenden tatsächlichen Verzögerungszeiten werden dem fokussierenden Beamformer 18 zugeführt.

In dem fokussierenden Beamformer 18 werden für jeden von der Peilanlage 13 als Zielpeilung $\theta_z$ erkannten Peilwinkel die Empfangssignale der Wandler 11 um die wie vorstehend errechneten Verzögerungszeiten verzögert und die so entstehenden konphasen Empfangssignale addiert, wobei für jeden Fokalpunkt 20 auf dem Peilstrahl 19 ein sog. Fokussignal entsteht. In einem dem Beamformer 18 nachgeschalteten Funktionsblock 24 werden die Pegel P der Fokussignale in Abhängigkeit von dem Entfernungskehrwert $R_k^{-1}$ bestimmt, der ein Maß für die Krümmung der an der Wandleranordnung 10 einfallenden Wellenfront einer von einer im Fokalpunkt 20 liegenden Schallquelle erzeugten Schallwelle ist. Die dadurch entstehende Funktion des Pegelverlaufs über dem Entfernungskehrwert $R_k^{-1}$ ist beispielhaft für ein unter einem Peilwinkel $\theta_z$ liegenden Peilstrahl 19 in Fig. 6 dargestellt. Deutlich ist zu sehen, daß die Funktion ein ausgeprägtes Maximum und bezogen auf das Maximum einen symmetrischen Kurvenverlauf aufweist. Dieses Maximum der Funktion $P(R_k^{-1}) = g(R_k^{-1})$ wird mittels eines Maximumsuchers 25 bestimmt, der den dem Maximum zugehörigen Entfernungskehrwert $R_z^{-1}$ ausgibt, der einem Kehrwertbildner 26 zugeführt wird. Am Ausgang des Kehrwertbildners 26 wird die Zielentfernung $R_z$ des unter dem Peilwinkel $\theta_z$ detektierten Ziels ausgegeben. Die Zielentfernung $R_z$ wird der Anzeigevorrichtung 17 zugeführt und dort numerisch oder graphisch dargestellt.

Die Bestimmung des Maximums im Pegelverlauf $P(R_k^{-1})$ als Funktion des Entfernungskehrwerts $R_k^{-1}$ erfolgt in der Weise, daß für jede Zielpeilung $\theta_z$ der Gradient durch Bildung der ersten Ableitung der Funktion und die Krümmung durch Bildung der zweiten Ableitung der Funktion jeweils nach dem Entfernungskehrwert $R_k^{-1}$ berechnet und derjenige Pegel als Pegelmaximum ausgegeben wird, in dem der Gradient Null und die Krümmung negativ ist.

Eine solche Bestimmung der Zielentfernung führt zu guten Ergebnissen, wenn die Empfangssignale der Wandler 11 nicht oder nur wenig verrauscht sind, die aus dem Schallempfang erhaltenen Empfangssignale also ein gutes Nutz/Störverhältnis SNR aufweisen. Ist dies nicht der Fall, so wird der von dem Maximumsucher ausgegebene Entfernungskehrwert $R_z^{-1}$ nicht dem Kehrwertbildner 26 zugeführt, sondern einem statistischen Filter 27, was durch eine Umschaltung des nur symbolisch dargestellten Schalters 28 im Blockschaltbild der Fig. 1 illustriert ist. Als statistisches Filter 27 wird bevorzugt ein laufendes Medianfilter, ein sog. Running Median verwendet, das im inversen Entfernungsraum $(R^{-1})$ erwartungstreu ist und eine minimale Varianz zeigt. Im Filter 27 wird die Zielentfernung $R_z$ geschätzt, indem der Median der als Zielentfernungen detektierten Entfernungskehrwerte $R_z^{-1}$ aus einer festgelegten Anzahl von letzten Messungen gebildet und davon der Kehrwert genommen wird. Die geschätzte Entfernung $R_z$ wird wiederum der Anzeigevorrichtung 17 zugeführt und dort numerisch und graphisch dargestellt. Selbstverständlich kann auch ein anderes statistisches Filter 27 verwendet werden, in dem z. B. die statistische Schätzung der Zielentfernung $R_z$ in der Weise vorgenommen wird, daß das arithmetische Mittel der als Zielentfernungen detektierten Entfernungskehrwerte $R_z^{-1}$ aus einer festgelegten Anzahl von letzten Messungen gebildet und davon der Kehrwert gebildet wird.

Im statistischen Filter 27 wird noch zusätzlich ein Konfidenzintervall (range of confidence) KI für den geschätzten Entfernungswert bestimmt, wozu der Median der absoluten Abweichung von Entfernungskehrwerten vom zuvor beschrieben gebildeten Median über in der Vergangenheit ermittelte Entfernungskehrwerte gebildet wird. Ein großer Wert des Konfidenzintervalls zeigt, daß die Zielentfernungskehrwerte große Schwankungen aufweisen, also nicht stabil sind und somit kein großes Vertrauen genießen. Möglich ist mit dem Konfidenzintervall auch eine Angabe eines Fehlerfensters für die erwartende Zielentfernung.

Auch das Konfidenzintervall wird der Anzeigevorrichtung 17 zugeführt und dort dargestellt.

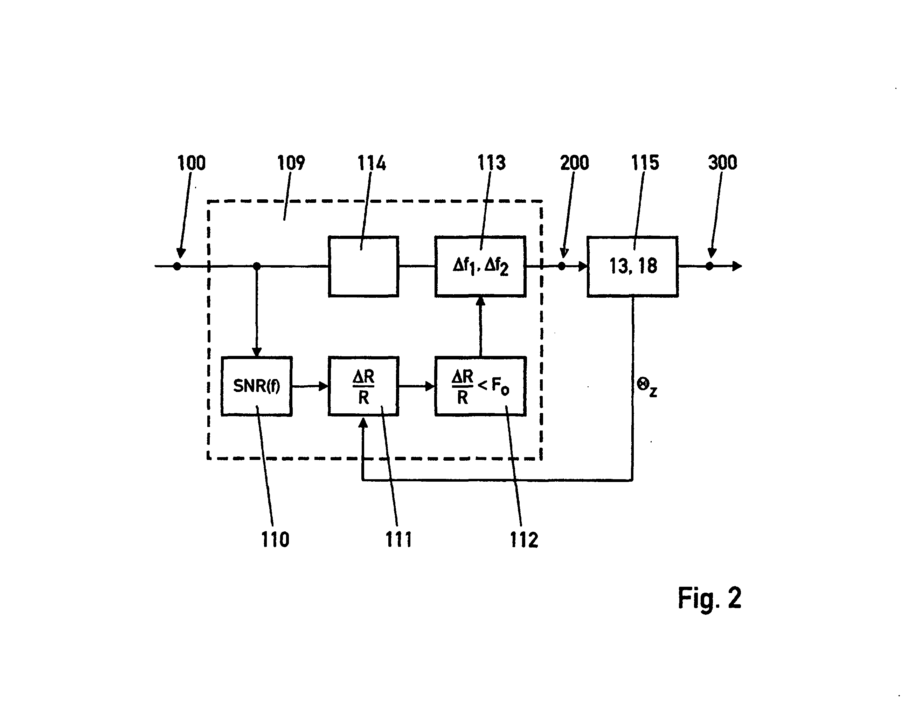

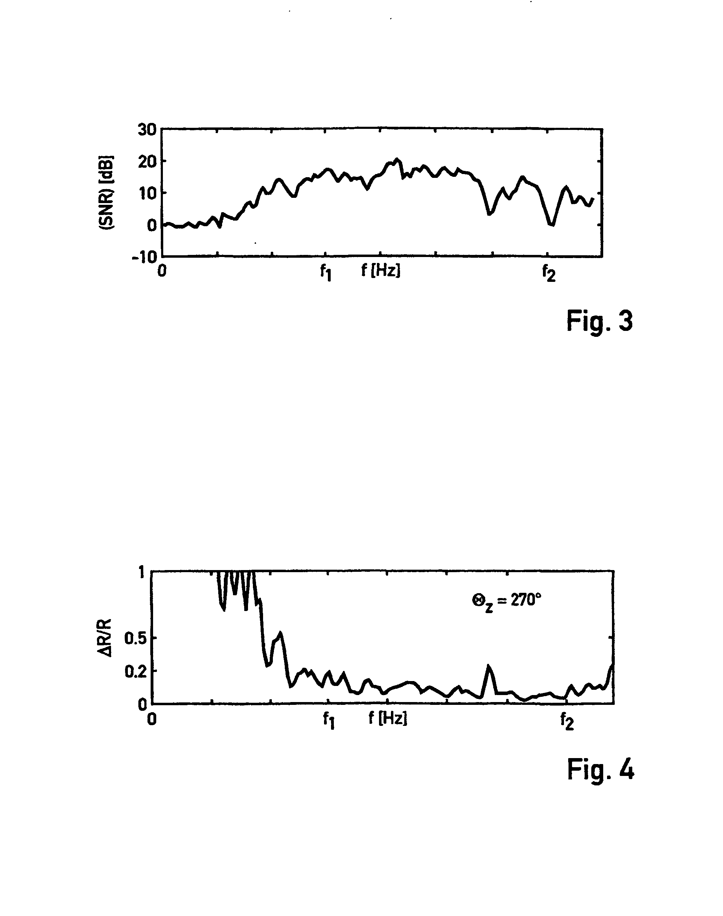

Zwischen die Punkte 100 und 200 am Eingang des Richtungsbildners 14 und des fokussierenden Beamforms 18 wird wahlweise eine Filteranordnung 109 für die Empfangssignale der Wandler 11 geschaltet, die in Fig. 2 dargestellt ist. Von einem der Empfangssignale der Wandler 11 wird in einer Rechenschaltung 110 das Nutz/Störverhältnis bestimmt und mit einem vorgebbaren Zeit-Band-Breite-Produkt, das eine Integrationszeit für die Pegelbestimmung des Fkoussignals berücksichtigt, sowie der Anzahl der Wandler 11 multipliziert. Die Rechnerschaltung 110 liefert das frequenzabhängige Nutz/Störverhältnis $SNR_B$ des Fokussignals, dessen Verlauf in Fig. 3 über der Frequenz als Spektrum gezeigt ist. In der nachgeordneten Fehlerberechnungsschaltung 111 wird der relative statistische Fehler der Entfernung

$$\frac{\Delta R}{R} = R \; \frac{4\sqrt{5}\; c}{\pi f L^2 \; \sqrt{SNR_B}} \qquad\qquad \text{VIII}$$

berechnet, wobei c die Schallgeschwindigkeit, f die Frequenz, L die Länge der effektiven Apertur, die abhängig vom Peilwinkel $\theta_z$ ist, und $SNR_B$ das Nutz/Störverhältnis des Fokussignals ist. Die Fehlerberechnungsschaltung 111 wird vom Peilwinkel $\theta_z$ angesteuert, den die Peilanlage 13 liefert.

Den Verlauf des relativen statistischen Fehlers der Entfernung $\Delta R/R$ zeigt Fig. 4 der eine starke Frequenzabhängigkeit deutlich macht. Die geringsten Fehler treten im Frequenzbereich vom f1 bis f2 auf und liegen unter einer vorgebbaren Fehlergrenze von z.B. 0,2. Über eine Steuerschaltung 112 wird eine Frequenzauswahlschaltung 113 angesteuert, die Empfangssignale aus einer Frequenzanalyseschaltung 114 in diesen Frequenzbereich f1 bis f2 oder in einzelnen Frequenzbändern $\Delta$f1, $\Delta$f2 dieses Frequenzbereichs f1 bis f2 über den Punkt 200 an die Peilanlage 13 und den fokussierenden Beamformer 15 in Fig. 1 durchschaltet. Mit dieser Maßnahme wird erreicht, daß der relative statistische Fehler für die ermittelten Zielentfernungen beispielsweise unter 2 % liegt.

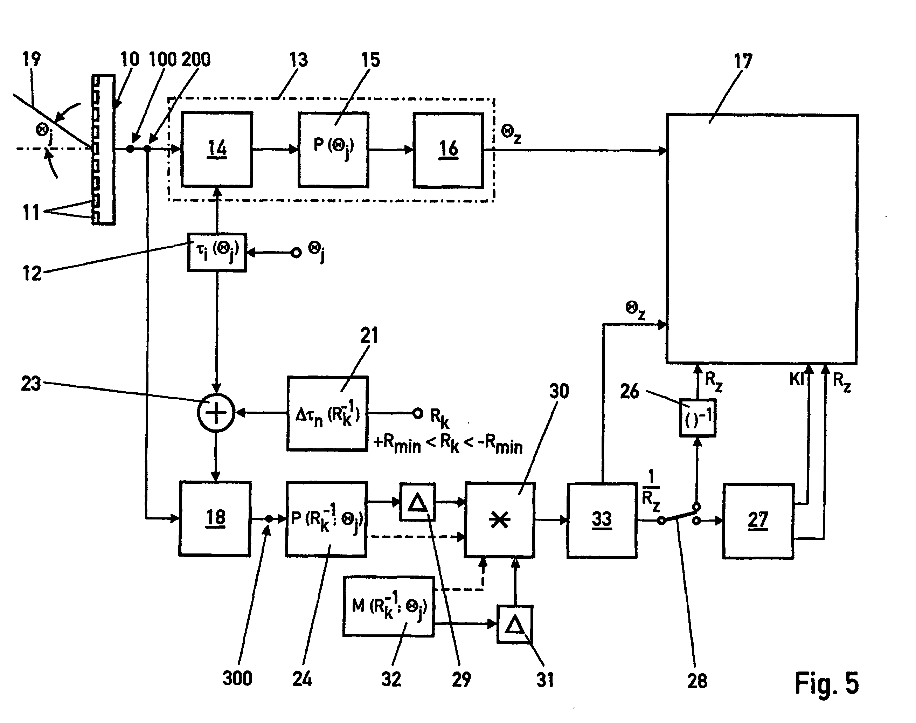

Das durch das Blockschaltbild gemäß Fig. 5 illustrierte und nachfolgend beschriebene, modifizierte Verfahren zur passiven Ortung von schallabstrahlenden Zielen ist insoweit abgeändert, als die von der Peilanlage 13 detektierten Zielpeilungen $\theta_z$ nicht als Vorabinformation über die Einfallsrichtung des von dem Ziel abgestrahlten Schalls benutzt werden, sondern der Empfangssektor vor der Wandleranordnung 10 vollständig nach vorhandenen Schallquellen durchsucht wird. Hierzu wird durch geeignete Zeitverzögerungen der Empfangssignale der Wandler 11 der Wandleranordnung 10 ein Raster von Peilwinkeln $\theta_j$ und Entfernungskerwert $R_k^{-1}$ gebildet, und für jeden Fokalpunkt 20, der durch die Rasterkoordinaten bestimmt ist, vom fokussierenden Beamformer 18 ein Fokussignal generiert. Die erforderlichen Verzögerungszeiten werden wie vorstehend beschrieben in dem Verzögerungszeitrechner 12 und dem Verzögerungszeitrechner 21 gebildet, im Summierglied 23 addiert und dem fokussierenden Beamformer 18 zugeführt. Der Beamformer 18 erzeugt durch konphase Addition der Empfangssignale für jeden Fokalpunkt, der durch einen

Peilwinkel $\theta_j$ und einen Entfernungskehrwert $R_k^{-1}$ definiert ist, ein Fokussignal.

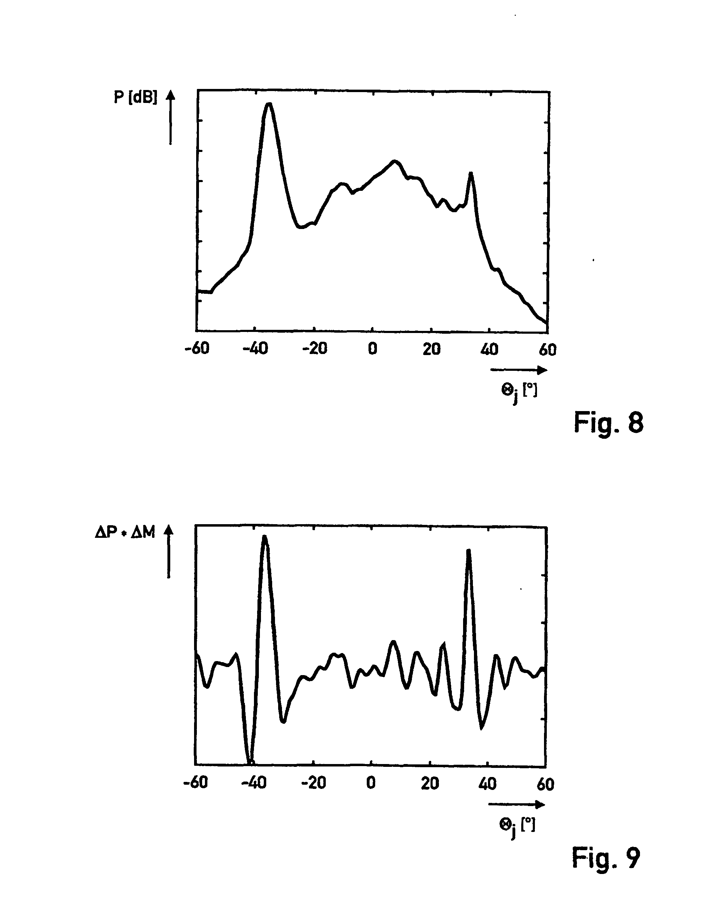

Im Funktionsblock 24 wird der Pegel P der Fokussignale - wie bei dem vorstehend beschriebenen Verfahren - in Abhängigkeit von dem Entfernungskehrwert $R_k^{-1}$ und - anders als bei dem vorstehend beschriebenen Verfahren - auch in Abhängigkeit von dem Peilwinkel $\theta_j$ bestimmt und der Pegelverlauf $P(\theta_j, R^{-1}_k)$ als zweidimensionale Funktion des Entfernungskehrwerts $R_k^{-1}$ und des Peilwinkels $\theta_j$ gebildet. Diese zweidimensionale Funktion $P(R_k^{-1}, \theta_j)$ ist beispielhaft im Diagramm der Fig. 7 dargestellt. Deutlich ist zu erkennen, daß bei dem angenommenen Beispiel Maxima im Pegelverlauf über dem Entfernungskehrwert $R^{-1}_k$ und im Pegelverlauf über dem Peilwinkel $\theta_j$ auftreten. Diese Maxima charakterisieren im Empfangssektor vorhandene Ziele, so daß die genaue Bestimmung der Lage der Maxima die durch die Peilrichtung und Entfernung definierte Lage der Ziele ergibt. In Fig. 8 ist ein Schnitt durch die zweidimensionale Funktion in Fig. 7 dargestellt, wobei der Schnitt durch den Entfernungskehrwert $R_k^{-1} = 0$ gelegt ist.

Bei einer Frequenzselektion der breitbandigen Empfangssignale der Wandler 11 mit einer Filteranordnung 109 gemäß Fig. 2 bilden die Peilanlage 13 und der fokussierende Beamformer 15 einen Funktionsrechner 115, wie in Fig. 2 angedeutet, der die zweidimensionale Funktion des Pegelverlaufs $P(R_k^{-1}, \theta_j, f)$ in Abhängigkeit vom Entfernungskehrwert $R_k^{-1}$ und Peilwinkel $\theta_j$ schmalbandig für ausgewählte Frequenzen f liefert. Eine Realisierung dieses Funktionsrechners 115 ist im Zeitbereich durch Schätzen der Kovarianz-Matrix möglich. Vorteilhaft ist der Pegelverlauf $P(R_k^{-1}, \theta_j, f)$ durch Berechnen einer Kreuzleistungsdichte-Matirx zu schätzen, wenn die Emfangssignale über einer Fourier-Transformation als komplexe Empfangsspektren am Ausgang Frequenzanalyseschaltung 114 vorliegen. Für die Ortung von Zielen ist eine Richtungsbildung und gleichzeitige Fokussierung bei einer frequenzmäßigen Aufteilung der Empfangssignale sowohl im Zeitbereich, wie auch im Frequenzbereich durchführbar.

Zur Bestimmung der Maxima in der zweidimensionalen Funktion des Pegelverlaufs $P(R_k^{-1}, \theta_j)$ wird auf diese Funktion in dem Rechenblock 29 der Laplace-Operator angewendet, so daß die Krümmung des Pegelverlaufs als zweidimensionale Funktion von dem Entfernungskehrwert $R_k^{-1}$ und dem Peilwinkel $\theta_j$ erhalten wird. In einem Simmulationsrechner 32 wird als Musterverteilung eine zweidimensionale Funktion $M(\theta_j; R_k^{-1})$ von Entfernungskehrwert $R_k^{-1}$ und Peilwinkel $\theta_j$ für mindestens ein Ziel berechnet, und im Rechenblock 31 deren Krümmung durch Anwendung des Laplace-Operators berechnet. Die Musterverteilung entspricht dem Pegelverlauf für ein Punktziel in Querabrichtung bei unendlicher Entfernung, d.h. Krümmung 0 und Pegel 1. Dadurch ist gewährleistet, daß bei der Faltung keine Verschiebung der Ziele in Peilwinkel oder Entfernung entsteht und die Amplitude eines Ziels nicht verändert wird. Als Strahlverlauf in $R^{-1}$ und $\theta$ wird ein Gauß'sches Strahlprofil verwendet, wobei das Strahlprofil den Verlauf des Pegels einer fokussierenden Wandleranordnung in Abhängigkeit vom Abstand zum Fokalpunkt entspricht. Im Block 30 wird die Krümmung des Pegelverlaufs mit der Krümmung der Musterverteilung oder Musterfunktion $M(R_k^{-1}, \theta_j)$ gefaltet. Die zweidimensionale Faltung der Krümmung des Pegelverlaufs mit der Krümmung der theoretischen Musterverteilung läßt im Faltungsintegral schwache Schallquellen innerhalb des Empfangssektors stärker hervortreten, da sie sich deutlicher vom Rauschhintergrund abheben.

In Fig. 9 ist beispielhaft das Faltungsintegral als Ergebnis der Faltungen der Krümmungen für ein dem Pegelverlauf in Fig. 8 zugrunde liegendes Szenario dargestellt. Während in dem Pegelverlauf als Funktion des Peilwinkels (Fig. 8) ein deutliches Maximum bei -38° und ein wesentlich kleineres Maximum bei +37° zu erkennen ist, könnte auch ein Maximum bei 8° vermutet werden. Das Faltungsintegral gemäß Fig. 9 bestätigt das Maximum bei -38° und läßt das Maximum +37° wesentlich stärker hervortreten. Dagegen ist der Bereich von -10° bis +20° gegenüber dem gleichen Bereich im Pegelverlauf (Fig. 8) stark abgesenkt, so daß erkennbar ist, daß in diesem Peilwinkelbereich kein Maximum und somit keine Schallquelle vorhanden ist und der Pegelanstieg im Pegelverlauf der Fig. 8 lediglich auf Nachhall oder andere Störungen zurückzuführen ist. Das als Ergebnis der Faltung entstehende Faltungsintegral wird einem Peakdetektor 33 zugeführt, der die Peaks erkennt und zu jedem Peak den zugehörigen Entfernungskehrwert $R_z^{-1}$ und den zugehörigen Peilwinkel $\theta_z$ des jeweiligen Ziels ausgibt. Die Zielpeilung $\theta_z$ und die Zielentfernung $R_z$, letztere wiederum an dem Kehrwertbildner 26 abgenommen, werden der Anzeigevorrichtung 17 zugeführt und dort numerisch und graphisch dargestellt.

Bei verrauschten Signalen wird - wie bei dem vorstehend beschriebenen Verfahren - erst nach einer statistischen Filterung der in den Einzelmessungen geschätzten Entfernungskehrwerte $R_z^{-1}$ eine Schätzung für die Entfernung $R_z$ abgegeben. In gleicher Weise wie zu Fig. 1 beschrieben, wird hierzu von dem Peakdetektor 33 der zu jeweils einer Zielpeilung $\theta_z$ zugehörige Entfernungskehrwert $R_z^{-1}$ dem statistischen Filter 27 zugeführt, in dem die Filterung in gleicher Weise wie bereits beschrieben durchgeführt wird. Der geschätzte Wert der Zielentfernung $R_z$ sowie das zugehörige Konfidenzintervall KI werden der Anzeigevorrichtung 17 zugeführt und dort numerisch und graphisch dargestellt.

Selbstverständlich ist es möglich, nur eine Faltung des Pegelverlaufs als zweidimensionale Funktion von Entfernungskehrwert und Peilwinkel mit der Musterverteilung als zweidimensionale Funktion von Entfernungskehrwert und Peilwinkel durchzuführen. Die Faltung reduziert ein Großteil des Rauschens und läßt im Faltungsintegral gut auszuwertende Peaks entstehen. Die den Peaks zugehörigen Entfernungskehrwerte $R_z^{-1}$ und Peilwinkel $\theta_z$ stehen am Ausgang des Peakdetektors 33 an. Dies ist in Fig. 5 durch die die Rechenblöcke 29, 31 umgehenden, strichliniert dargestellten Signalflußpfeile symbolisiert. Vor der Peakauswertung könnte noch die zweite Ableitung des Faltungsintegrals gebildet werden, wodurch die Peaks noch deutlicher hervortreten.

Wie in Fig. 5 ebenfalls nicht weiter dargestellt ist, kann auf die Berechnung einer Musterverteilung ganz verzichtet werden und in dem im Funktionsblock 24 gebildeten zweidimensionalen Pegelverlauf $P(\theta_j, R_k^{-1})$ durch partielle Differentiation der zweidimensionalen Funktion nach Entfernungskehrwert $R^{-1}$ und Peilwinkel $\theta$ Gradient und Krümmung berechnet werden. Als Maxima werden dann wiederum die Entfernungswerte $R_z^{-1}$ und Peilwinkel $\theta_z$ ausgegeben, in denen der Gradient Null und die Krümmung negativ ist. Für die erforderliche zweimalige Differentiation der Funktion wird auch hier der Laplace-Operator verwendet.

Das erfindungsgemäße Verfahren ist nicht auf die vorstehend beschriebenen Ausführungsbeispiele beschränkt. So kann als Wandleranordnung eine beliebige Empfangsantenne verwendet werden, auch eine Schleppantenne, wenn gewährleistet ist, daß die Apertur der Antenne genügend groß ist, um die gewünschte Auflösung zu erreichen. Bei Verwendung einer zweidimensional ausgedehnten Wandleranordnung, einem sog. Flächen-Array, können Ziele nicht nur in dem von der Wandleranordnung 10 bzw. der Empfangsantenne in der Horizontalebene aufgespannten Empfangssektor, sondern in einem dreidimensionalen Raumsektor detektiert und geortet werden. Der gleiche Signalverarbeitungsvorgang, wie er für ein in der Horizontalebene sich erstreckendes Linear-Array beschrieben ist, muß dann mit den gegebenenfalls auch frequenzmäßig selektierten Empfangssignalen von in der Vertikalrichtung übereinandergereihten Wandlern durchgeführt werden. Alternativ kann auch der Pegelverlauf der Fokussignale in Abhängigkeit des Empfangskehrwerts und eines räumlichen Peilwinkels, der die Lage des Ziels im Azimut und Elevation bestimmt, als zweidimensionale Funktion des Entfernungskehrwerts und des räumlichen Peilwinkels gebildet werden. Zur Bestimmung der Maxima im Pegelverlauf wird wiederum der Laplace-Operator verwendet sowie eine zweidimensionale Faltung mit einer entsprechenden Musterverteilung durchgeführt.

Die Signalverarbeitung kann sowohl mit analogen als auch mit digitalen Signalen durchgeführt werden. Liegen die Signale in zeitdiskreter Form mit der Samplingfrequenz $f_s$ vor, so wird aus den Laufzeitdifferenzen zur Verzögerung der Empfangssignale die Anzahl der Samples berechnet, um die das gesampelte Signal verzögert werden muß. Nach der Verzögerung werden alle Empfangssignale ebenfalls addiert, so daß durch die konphase Addition der aus der gleichen Einfallsrichtung stammenden Schallwellen die fokussierende Wirkung des Verfahrens erzielt wird.

Zur Bestimmung des Pegels der Fokussignale wird die Energie der Fokussignale herangezogen. Selbstverständlich kann auch die Leistung oder die Amplitude der Fokussignale als Maß für den Pegel verwendet werden.

## Patentansprüche

1. Verfahren zur passiven Ortung von schallabstrahlenden Zielen unter Verwendung einer einen Empfangssektor aufspannenden Wandleranordnung (10) mit voneinander beabstandeten, elektroakustischen Wandlern (11), bei dem die Wandleranordnung (10) durch definierte Phasenverschiebung und/oder Zeitverzögerung ihrer Empfangssignale auf angenommene Fokalpunkte (20) fokussiert wird, die auf Peilstrahlen (19) hintereinandergereiht sind, und durch konphase Addition der verzögerten Empfangssignale den Fokalpunkten (20) zugeordnete Fokussignale gebildet werden, **dadurch gekennzeichnet, daß** für jeden Peilstrahl (19) die Pegel (P) der Fokussignale in Abhängigkeit von dem Kehrwert der Entfernung $(R_k^{-1})$ der Fokalpunkte (20) von der Wandleranordnung (10) bestimmt werden und der Pegelverlauf $(P(R_k^{-1}))$ als Funktion des Entfernungskehrwerts $(R_k^{-1})$ gebildet wird und daß im Pegelverlauf $(P(R_k^{-1}))$ das Maximum gesucht und aus dem Maximum zugehörigen Entfernungskehrwert $(R_z^{-1})$ die Zielentfernung $(R_z)$ geschätzt wird.

2. Verfahren nach Anspruch 1, **dadurch gekennzeichnet, daß** die Fokalpunkte (20) auch für als Hilfsgröße eingeführte nicht reale, negative Entfernungen zur Wandleranordnung (10) angenommen werden.

3. Verfahren nach Anspruch 2, **dadurch gekennzeichnet, daß** der mit angenommenen Fokalpunkten (20) abgedeckte Entfernungsbereich größer als $+R_{min}$ und kleiner als $-R_{min}$, und $R_{min}$ in Abhängigkeit von einer zugelassenen Mindestentfernung von der Wandleranordnung (10) gewählt wird.

4. Verfahren nach einem der Ansprüche 1 - 3, **dadurch gekennzeichnet, daß** die Fokussierung der Wandleranordnung (10) nur auf solche Fokalpunkte (20) vorgenommen wird, die auf als Zielpeilungen $(\theta_z)$ erkannten Peilstrahlen (19) liegen.

5. Verfahren nach Anspruch 4, **dadurch gekennzeichnet, daß** in jedem Pegelverlauf $(P(R_k^{-1}))$ als Funktion des Entfernungskehrwerts $(R_k^{-1})$ der Gradient und die Krümmung berechnet und diejenigen Entfernungskehrwerte als Maxima im Pegelverlauf ausgegeben werden, in denen der Gradient Null und die Krümmung negativ ist.

6. Verfahren nach Anspruch 5, **dadurch gekennzeichnet, daß** die den Pegelmaxima zugehörigen Entfernungskehr-

werte ($R_z{}^{-1}$) nach Kehrwertbildung als Zielentfernungen ($R_z$) ausgegeben werden.

7. Verfahren nach einem der Ansprüche 1 - 6, **dadurch gekennzeichnet, daß** ein statistischer Fehler ($\Delta K$) des Entfernungskehrwerts ($R^{-1}$) aus dem Nutz/Störverhältnis ($SNR_B$) des Fokussignals im Fernfeld geschätzt wird und daraus ein frequenzabhängiger, relativer statistischer Fehler ($\Delta R/R$) der Zielentfernung (R) ermittelt wird.

8. Verfahren nach Anspruch 7, **dadurch gekennzeichnet, daß** der relative statistische Fehler ($\Delta R/R$) der Zielentfernung (R) umgekehrt proportional mit der Frequenz (f) und der Wurzel des Nutz/Störverhältnisses ($SNR_B$) des Fokussignals wächst.

9. Verfahren nach Anspruch 7 oder 8, **dadurch gekennzeichnet, daß** unter Berücksichtigung der Wandleranzahl (n) und einer peilwinkelabhängigen Aperturlänge (L) der zur Fokussierung herangezogenen Wandler (11) das Nutz/Störverhältnis ($SNR_B$) des Fokussignals aus dem Nutz/Störverhältnis ($SNR_B$) eines Empfangssignals am Wandler (11) multipliziert mit einem vorgebbaren Zeit-Bandbreite-Produkt ermittelt wird.

10. Verfahren nach einem der Ansprüche 7 - 9, **dadurch gekennzeichnet, daß** ein Frequenzbereich ($f_1$ bis $f_2$), einzelne Frequenzen und/oder ein oder mehrere Frequenzbänder ($\Delta f_1$, $\Delta f_2$) abhängig vom Frequenzverlauf des relativen statistischen Fehlers (AR/R) ausgewählt werden, für die der Fehler ($\Delta R/R$) kleiner als eine vorgebbare Fehlergrenze ist, und daß der Pegelverlauf ($P(R_k{}^{-1})$ für diesen Frequenzbereich ($f_1$ bis $f_2$), einzelne Frequenzen oder ein oder mehrere Frequenzbänder ($\Delta f_1$, $\Delta f_2$) ermittelt wird.

11. Verfahren nach einem der Ansprüche 1 - 10, **dadurch gekennzeichnet, daß** die Fokussierung der Wandler (11) auf alle Fokalpunkte (20) vorgenommen wird, die auf um diskrete Peilwinkel ($\theta_j$) gegeneinander versetzten, den Empfangssektor rasterartig abdeckenden Peilstrahlen (19) liegen, und daß für jeden Peilstrahl (19) die Pegel (P) der Fokussignale in Abhängigkeit von den Peilwinkeln ($\theta_j$) bestimmt werden und der Pegelverlauf ($P(\theta_j)$) als Funktion des Peilwinkels ($\theta_j$) gebildet wird und daß im Pegelverlauf ($P(\theta_j)$) als Funktion des Peilwinkels ($\theta_j$) Maxima detektiert und als Zielpeilungen ($\theta_z$) angegeben werden.

12. Verfahren nach Anspruch 11, **dadurch gekennzeichnet, daß** der Pegelverlauf ($P(\theta_j, R_k{}^{-1})$) als zweidimensionale Funktion des Entfernungskehrwerts ($R_k{}^{-1}$) und des Peilwinkels ($\theta_j$) bestimmt wird und daß zur Maximadetektion Gradient und Krümmung des Pegelverlaufs ($P(\theta_j, R_k{}^{-1})$) durch partielle Differentiation berechnet wird und diejenigen Peilwinkel ($\theta_z$) und Entfernungskehrwerte ($R_k{}^{-1}$) als Maxima im Pegelverlauf ($P(\theta_j, R_k{}^{-1})$) ausgegeben werden, in denen der Gradient Null und die Krümmung negativ ist.

13. Verfahren nach Anspruch 11 oder 12, **dadurch gekennzeichnet, daß** aus Empfangssignalen der Wandler (11) für Frequenzen eines Frequenzbereichs ($f_1$ bis $f_2$) oder einzelner Frequenzbänder ($\Delta f_1$, $\Delta f_2$), die abhängig vom relativen statistischen Fehler (AR/R) ausgewählt werden, die zweidimensionale Funktion des Pegelverlaufs ($P(\theta_j, R_k{}^{-1}$, f) durch Schätzen der Kovarianz-Matrix bestimmt wird.

14. Verfahren nach Anspruch 11 oder 12, **dadurch gekennzeichnet, daß** aus komplexen Frequenzspektren der Empfangssiganale, die den Frequenzbereich ($f_1$ bis $f_2$) oder einzelne Frequenzbänder ($\Delta f_1$, $\Delta f_2$) oder Spektrallinien umfaßt, die abhängig vom relativen statistischen Fehler ($\Delta R/R$) ausgewählt werden, durch Schätzen der Kreuzleistungsdichte-Matrix die zweidimensionale Funktion des Pegelverlaufs ($P(\theta_j, R_k{}^{-1}$, f) bestimmt wird.

15. Verfahren nach einem der Ansprüche 12 - 14, **dadurch gekennzeichnet, daß** der Pegelverlauf ($P(\theta_j, R_k{}^{-1})$) breitbandig oder frequenzselektiv als zweidimensionale Funktion des Entfernungskehrwerts ($R_k{}^{-1}$) und des Peilwinkels ($\theta_j$) bestimmt wird, daß durch Simulationsrechnen eine zweidimensionale Musterverteilung ($M(\theta_j, R_k{}^{-1})$) für mindestens ein Ziel bestimmt und mit der zweidimensionalen Funktion des Pegelverlaufs ($P(\theta_j, R_k{}^{-1})$) gefaltet wird und daß die Maxima des zweidimensionalen Pegelverlaufs ($P(\theta_j, R_k{}^{-1})$) als Peaks im Faltungsintegral erfaßt werden.

16. Verfahren nach einem der Ansprüche 12 - 14, **dadurch gekennzeichnet, daß** der Pegelverlauf ($P(\theta_j, R_k{}^{-1})$) breitbandig oder frequenzselektiv als zweidimensionale Funktion des Entfernungskehrwerts ($R_k{}^{-1}$) und des Peilwinkels ($\theta_j$) bestimmt wird, daß durch Simulationsrechnen eine zweidimensionale Musterverteilung ($M(\theta_j, R_k{}^{-1})$) für mindestens ein Ziel bestimmt wird, daß die Krümmung von Pegelverlauf ($P(\theta_j, R_k{}^{-1})$) und Musterverteilung ($M(\theta_j, R_k{}^{-1})$) berechnet und gefaltet werden und daß die Maxima im zweidimensionalen Pegelverlauf ($P(\theta_j, R_k{}^{-1})$) als Peaks im Faltungsintegral erfaßt werden.

**17.** Verfahren nach Anspruch 15, **dadurch gekennzeichnet, daß** zur Berechnung der Krümmung der Laplace-Operator jeweils auf den Pegelverlauf ($P(\theta_j, R_k^{-1})$) und auf die Musterverteilung ($M(\theta_j, R_k^{-1})$) angewendet wird.

**18.** Verfahren nach einem der Ansprüche 1 - 17, **dadurch gekennzeichnet, daß** eine statistische Schätzung der Zielentfernung ($R_z$) in der Weise durchgeführt wird, daß der Median der als Zielentfernungen detektierten Entfernungskehrwerte ($R_z^{-1}$) aus einer festgelegten Anzahl von letzten Messungen gebildet und davon der Kehrwert genommen wird.

**19.** Verfahren nach Anspruch 18, **dadurch gekennzeichnet, daß** ein Konfidenzintervall (KI) aus dem Median des Betrags der absoluten Abweichung des ermittelten Enfernungskehrwerts ($R^{-1}$) von dem bei der Schätzung der Zielentfernung ($R_z$) gebildeten Mediane gebildet wird.

**20.** Verfahren nach einem der Ansprüche 1 - 17, **dadurch gekennzeichnet, daß** eine statistische Schätzung der Zielentfernung ($R_z$) in der Weise durchgeführt wird, daß das arithmetische Mittel der als Zielentfernungen detektierten Entfernungskehrwerte ($R_z^{-1}$) aus einer festgelegten Anzahl von letzten Messungen gebildet und davon der Kehrwert genommen wird.

**21.** Verfahren nach einem der Ansprüche 1 - 20, **dadurch gekennzeichnet, daß** eine linienförmige Wandleranordnung, z.B. eine Schleppantenne (Towed Array) oder eine Seitenantenne (Flank Array) verwendet wird.

**22.** Verfahren nach einem der Ansprüche 1-21, **dadurch gekennzeichnet, daß** die Zeitverzögerungen für die Empfangssignale der Wandler (11) aus der Berechnung der Laufzeiten $\tau_n$ für die Abstände $x_n$ der Wandler (11) von einem um den jeweiligen Fokalpunkt (20) gezogenen Kreisbogen, dessen Tangente den Mittelpunkt der Wandleranordnung (10) berührt, gemäß

$$\tau_n = \frac{x_n^2}{2c \cdot R_k}$$

gewonnen werden, wobei $\frac{1}{R_k}$ der Entfernungskehrwert des Fokalpunktes (20) und c die Schallgeschwindigkeit ist.

**23.** Verfahren nach einem der Ansprüche 1 - 22, **dadurch gekennzeichnet, daß** eine zweidimensionale ausgedrehte Wandleranordnung, z.B. ein Flächen-Array, verwendet wird.

## Claims

**1.** Method for passive location of sound-emitting targets by the use of a transducer arrangement (10) defining a receiving sector and having mutually spaced, electroacoustic transducers (11), in the case of which the transducer arrangement (10) is focused by means of a defined phase shift and/or time delay of its received signals onto assumed focal points (20) which are lined up sequentially on direction beams (19), and focusing signals assigned to the focal points (20) are formed by in-phase addition of the delayed received signals, **characterized in that** the levels (P) of the focusing signals are determined for each direction beam (19) as a function of the reciprocal of the range ($R_k^{-1}$) of the focal points (20) from the transducer arrangement (10), and the level profile ($P(R_k^{-1})$) is formed as a function of the range reciprocal ($R_k^{-1}$), and **in that** the maximum of the level profile ($P(R_k^{-1})$) is found and the target range ($R_z$) is estimated from the range reciprocal ($R_z^{-1}$) associated with the maximum.

**2.** Method according to Claim 1, **characterized in that** the focal points (20) are also assumed for virtual, negative ranges from the transducer arrangement (10) introduced as auxiliary variable.

**3.** Method according to Claim 2, **characterized in that** the range band covered with assumed focal points (20) is greater than $+R_{min}$ and smaller than $-R_{min}$, and $R_{min}$ is selected as a function of an allowed minimum range from the transducer arrangement (10).

**4.** Method according to one of Claims 1 - 3, **characterized in that** the transducer arrangement (10) is focused only onto those focal points (20) which lie on direction beams (19) recognized as target directions ($\theta_z$).

**5.** Method according to Claim 4, **characterized in that** the gradient and the curvature are calculated in each level

profile ($P(R_k^{-1})$) as a function of the range reciprocal ($R_k^{-1}$), and those range reciprocals at which the gradient is zero and the curvature is negative are output as maxima in the level profile.

6. Method according to Claim 5, **characterized in that** the range reciprocals ($R_z^{-1}$) associated with the level maxima are output as target ranges ($R_z$) after formation of the reciprocal.

7. Method according to one of Claims 1 - 6, **characterized in that** a statistical error ($\Delta K$) of the range reciprocal ($R^{-1}$) is estimated from the signal-to-noise ratio ($SNR_B$) of the focusing signal in the far field, and a frequency-dependent, relative statistical error ($\Delta R/R$) of the target range ($R$) is determined therefrom.

8. Method according to Claim 7, **characterized in that** the relative statistical error ($\Delta R/R$) of the target range ($R$) is inversely proportional to the frequency ($f$) and the root of the signal-to-noise ratio ($SNR_B$) of the focusing signal.

9. Method according to Claim 7 or 8, **characterized in that** the signal-to-noise ratio ($SNR_B$) of the focusing signal is determined from the signal-to-noise ratio ($SNR_B$) of a received signal at the transducer (11) multiplied by a prescribable time-bandwidth product by taking account of the number of transducers (n) and an aperture length (L), dependent on direction angle, of the transducers (11) used for focusing.

10. Method according to one of Claims 7 - 9, **characterized in that** a frequency range ($f_1$ to $f_2$), individual frequencies and/or one or more frequency bands ($\Delta f_1, \Delta f_2$) are selected as a function of the frequency profile of the relative statistical error ($\Delta R/R$), for which the errors ($\Delta R/R$) are smaller than a prescribable error limit, and **in that** the level profile ($P(R_k^{-1})$) is determined for this frequency range ($f_1$ to $f_2$), individual frequencies or one or more frequency bands ($\Delta f_1, \Delta f_2$).

11. Method according to one of Claims 1 - 10, **characterized in that** the transducers (11) are focused onto all focal points (20) which lie on direction beams (19) which are offset from one another by discrete direction angles ($\theta_j$) and cover the receiving sector in the form of a raster, and **in that** for each direction beam (19) the levels (P) of the focusing signals are determined as a function of the direction angles ($\theta_j$) and the level profile ($P(\theta_j)$) is formed as a function of the direction angle ($\theta_j$), and **in that** maxima are detected in the level profile ($P(\theta_j)$) as a function of the direction angle ($\theta_j$) and are specified as target directions ($\theta_z$).

12. Method according to Claim 11, **characterized in that** the level profile ($P(\theta_j, R_k^{-1})$) is determined as a two-dimensional function of the range reciprocal ($R_k^{-1}$) and of the direction angle ($\theta_j$), and **in that** for the purpose of maxima detection the gradient and curvature of the level profile ($P(\theta_j, R_k^{-1})$) are calculated by partial differentiation, and those detection angles ($\theta_z$) and range reciprocals ($R_k^{-1}$) at which the gradient is zero and the curvature is negative are output as maxima in the level profile ($P(\theta_j, R_k^{-1})$).

13. Method according to Claim 11 or 12, **characterized in that** the two-dimensional function of the level profile ($P(\theta_j, R_k^{-1}, f)$) is determined, by estimating the covariance matrix, from received signals of the transducers (11) for frequencies of a frequency range ($f_1$ to $f_2$) or individual frequency bands ($\Delta f_1, \Delta f_2$) which are selected as a function of relative statistical error ($\Delta R/R$).

14. Method according to Claim 11 or 12, **characterized in that** the two-dimensional function of the level profile ($P(\theta_j, R_k^{-1}, f)$) is determined, by estimating the cross-power density matrix, from complex frequency spectra of the received signals which comprise the frequency range ($f_1$ to $f_2$) or individual frequency bands ($\Delta f_1, \Delta f_2$) or spectral lines which are selected as a function of relative statistical error ($\Delta R/R$).

15. Method according to one of Claims 12 - 14, **characterized in that** the level profile ($P(\theta_j, R_k^{-1})$) is determined in a broadband or frequency-selective fashion as a two-dimensional function of the range reciprocal ($R_k^{-1}$) and of the direction angle ($\theta_j$), **in that** a two-dimensional pattern distribution ($M(\theta_j, R_k^{-1})$) is determined by simulation calculation for at least one target and is convoluted by the two-dimensional function of the level profile ($P(\theta_j, R_k^{-1})$), and **in that** the maxima of the two-dimensional level profile ($P(\theta_j, R_k^{-1})$) are determined as peaks in the convolution integral.

16. Method according to one of Claims 12 - 14, **characterized in that** the level profile ($P(\theta_j, R_k^{-1})$) is determined in a broadband or frequency-selective fashion as a two-dimensional function of the range reciprocal ($R_k^{-1}$) and of the direction angle ($\theta_j$), **in that** a two-dimensional pattern distribution ($M(\theta_j, R_k^{-1})$) is determined by simulation calculation for at least one target, **in that** the curvature of level profile ($P(0_j, R_k^{-1})$) and pattern distribution ($M(\theta_j, R_k^{-1})$)

are calculated and convoluted, and **in that** the maxima in the two-dimensional level profile ($P(\theta_j, R_k^{-1})$) are determined as peaks in the convolution integral.

17. Method according to Claim 15, **characterized in that** in order to calculate the curvature the Laplace operator is respectively applied to the level profile ($P(\theta_j, R_k^{-1})$) and to the pattern distribution ($M(\theta_j, R_k^{-1})$).

18. Method according to one of Claims 1 - 17, **characterized in that** a statistical estimate of the target range ($R_z$) is carried out in such a way that the median of the range reciprocals ($R_z^{-1}$) detected as target ranges is formed from a fixed number of last measurements, and the reciprocal thereof is taken.

19. Method according to Claim 18, **characterized in that** a confidence interval (KI) is formed from the median of the amount of the absolute deviation of the determined range reciprocal ($R_z^{-1}$) from the median formed when estimating the target range ($R_z$).

20. Method according to one of Claims 1 - 17, **characterized in that** a statistical estimate of the target range ($R_z$) is carried out in such a way that the arithmetic mean of the range reciprocals ($R_z^{-1}$) detected as target ranges is formed from a fixed number of last measurements, and the reciprocal thereof is taken.

21. Method according to one of Claims 1 - 20, **characterized in that** a linear transducer arrangement, for example a towed array or a flank array, is used.

22. Method according to one of Claims 1 - 21, **characterized in that** the time delays for the received signals of the transducers (11) are obtained from the calculation of the delay times $\tau_n$ for the spacings $x_n$ of the transducers (11) from a circular arc drawn about the respective focal point (20) and whose tangent touches the midpoint of the transducer arrangement (10), in accordance with

$$\tau_n = \frac{x_n^2}{2c \cdot R_k} \, ,$$

$\frac{1}{R_k}$ being the range reciprocal of the focal point (20), and c being the speed of sound.

23. Method according to one of Claims 1 - 22, **characterized in that** a two-dimensional turned-out transducer arrangement, for example a surface array, is used.

**Revendications**

1. Procédé de localisation passive de cibles émettant du son, en utilisant un ensemble (10) de transducteurs déterminant un secteur de réception et comportant des transducteurs électroacoustiques (11) mutuellement distants, procédé selon lequel l'ensemble (10) de transducteurs est, par un déphasage et/ou une temporisation défini(e) de ses signaux de réception, focalisé sur des points focaux supposés (20) qui sont alignés les uns à la suite des autres sur des lignes de relèvement (19), et des signaux de foyer associés aux points focaux (20) sont formés par addition en phase des signaux de réception différés, **caractérisé en ce que**, pour chaque ligne de relèvement (19), on détermine les niveaux (P) des signaux de foyer en fonction de la valeur inverse ($R_k^{-1}$) de la distance entre les points focaux (20) et l'ensemble (10) de transducteurs, et on forme l'allure de niveau ($P(R_k^{-1})$) en tant que fonction de la valeur inverse de distance ($R_k^{-1}$), et **en ce qu'**on trouve le maximum de l'allure de niveau ($P(R_k^{-1})$) et, à partir de la valeur inverse de distance ($R_k^{-1}$) associée au maximum, on estime l'éloignement ($R_z$) de la cible.

2. Procédé selon la revendication 1, **caractérisé en ce qu'**on prend également les points focaux supposés (20) pour des distances négatives imaginaires par rapport à l'ensemble (10) de transducteurs, qui sont introduites comme paramètre auxiliaire.

3. Procédé selon la revendication 2, **caractérisé en ce que** la plage de distance couverte avec les points focaux supposés (20) est choisie supérieure à $+R_{min}$ et inférieure à $-R_{min}$, et $R_{min}$ en fonction d'une distance minimale autorisée par rapport à l'ensemble (10) de transducteurs.

4. Procédé selon l'une quelconque des revendications 1 à 3, **caractérisé en ce qu'**on entreprend la focalisation de l'ensemble (10) de transducteurs uniquement sur les points focaux (20) qui se trouvent sur des lignes de relèvement (19) reconnues comme relèvements de cible ($\theta_z$).

**5.** Procédé selon la revendication 4, **caractérisé en ce que**, dans chaque allure de niveau ($P(R_k^{-1})$) sous forme de fonction de la valeur inverse de distance ($R_k^{-1}$), on calcule le gradient et la courbure, et on édite comme maxima de l'allure de niveau les valeurs inverses de distance pour lesquelles le gradient est nul et la courbure négative.

**6.** Procédé selon la revendication 5, **caractérisé en ce que** les valeurs inverses de distance ($R_z^{-1}$) associées aux maxima de niveau sont, après formation de la valeur inverse, éditées comme éloignements ($R_z$) de la cible.

**7.** Procédé selon l'une quelconque des revendications 1 à 6, **caractérisé en ce qu'**on estime une erreur aléatoire ($\Delta K$) de la valeur inverse de distance ($R^{-1}$) à partir du rapport signal/parasite ($SNR_B$) du signal de foyer dans le champ éloigné, et on détermine à partir d'elle une erreur aléatoire relative ($\Delta R/R$), fonction de la fréquence, de l'éloignement (R) de la cible.

**8.** Procédé selon la revendication 7, **caractérisé en ce que** l'erreur aléatoire relative ($\Delta R/R$) de l'éloignement (R) de la cible augmente d'une manière inversement proportionnelle à la fréquence (f) et à la racine du rapport signal/paràsite ($SNR_B$) du signal de foyer.

**9.** Procédé selon la revendication 7 ou 8, **caractérisé en ce que**, en tenant compte du nombre (n) de transducteurs et d'une longueur d'ouverture (L), fonction de l'angle de relèvement, des transducteurs (11) utilisés pour la focalisation, on détermine le rapport signal/parasite ($SNR_B$) du signal de foyer à partir du rapport signal/parasite ($SNR_B$) d'un signal reçu par le transducteur (11), multiplié par un produit prédéfinissable du temps et de la largeur de bande.

**10.** Procédé selon l'une quelconque des revendications 7 à 9, **caractérisé en ce qu'**on sélectionne, en fonction de l'allure de fréquence de l'erreur aléatoire relative ($\Delta R/R$), une plage de fréquences ($f_1$ à $f_2$), des fréquences individuelles et/ou une ou plusieurs bandes de fréquences ($\Delta f_1$, $\Delta f_2$) pour lesquelles l'erreur ($\Delta R/R$) est inférieure à une limite d'erreur prédéfinissable, et **en ce qu'**on détermine l'allure de niveau ($P(R_k^{-1})$) pour cette plage de fréquences ($f_1$ à $f_2$), ces fréquences individuelles ou cette ou ces bandes de fréquences ($\Delta f_1$, $\Delta f_2$).

**11.** Procédé selon l'une quelconque des revendications 1 à 10, **caractérisé en ce qu'**on entreprend la focalisation des transducteurs (11) sur tous les points focaux (20) qui se trouvent sur des lignes de relèvement (19) mutuellement décalées d'angles de relèvement discrets ($\theta_j$) et couvrant le secteur de réception à la manière d'un quadrillage, et **en ce que**, pour chaque ligne de relèvement (19), on détermine les niveaux (P) des signaux de foyer en fonction des angles de relèvement ($\theta_j$) et on forme l'allure de niveau ($P(\theta_j)$) en tant que fonction de l'angle de relèvement ($\theta_j$), et **en ce qu'**on détecte des maxima dans l'allure de niveau ($P(\theta_j)$) en tant que fonction de l'angle de relèvement ($\theta_j$), et on les indique comme relèvements de cible ($\theta_z$).

**12.** Procédé selon la revendication 11, **caractérisé en ce qu'**on détermine l'allure de niveau ($P(\theta_j, R_k^{-1})$) en tant que fonction bidimensionnelle de la valeur inverse de distance ($R_k^{-1}$) et de l'angle de relèvement ($\theta_j$), et **en ce que**, pour la détection des maxima, on calcule le gradient et la courbure de l'allure de niveau ($P(\theta_j, R_k^{-1})$) par différentiation partielle, et on édite comme maxima dans l'allure de niveau ($P(\theta_j, R_k^{-1})$) les angles de relèvement ($\theta_z$) et valeurs inverses de distance ($R_k^{-1}$) pour lesquels le gradient est nul et la courbure négative.

**13.** Procédé selon la revendication 11 ou 12, **caractérisé en ce que**, à partir des signaux de réception des transducteurs (11) pour des fréquences d'une plage de fréquences ($f_1$ à $f_2$) ou des bandes de fréquences individuelles ($\Delta f_1$, $\Delta f_2$), qui sont sélectionnées en fonction de l'erreur aléatoire relative ($\Delta R/R$), on détermine la fonction bidimensionnelle de l'allure de niveau ($P(\theta_j, R_k^{-1}, f$) par estimation de la matrice de covariance.

**14.** Procédé selon la revendication 11 ou 12, **caractérisé en ce que**, à partir du spectre complexe de fréquences des signaux de réception qui englobe la plage de fréquences ($f_1$ à $f_2$) ou des bandes de fréquences individuelles ($\Delta f_1$, $\Delta f_2$) ou des lignes spectrales qui sont sélectionnées en fonction de l'erreur aléatoire relative ($\Delta R/R$), on détermine la fonction bidimensionnelle de l'allure de niveau ($P(\theta_j, R_k^{-1}, f$) par estimation de la matrice de densité de puissance croisée.

**15.** Procédé selon l'une quelconque des revendications 12 à 14, **caractérisé en ce qu'**on détermine l'allure de niveau ($P(\theta_j, R_k^{-1})$) à large bande ou de manière sélective en fréquence en tant que fonction bidimensionnelle de la valeur inverse de distance ($R_k^{-1}$) et de l'angle de relèvement ($\theta_j$), **en ce qu'**on détermine par calcul de simulation une répartition modèle bidimensionnelle ($M(\theta_j, R_k^{-1})$) pour au moins une cible et on la convole avec la fonction bidimensionnelle de l'allure de niveau ($P(\theta_j, R_k^{-1})$), et **en ce qu'**on détermine les maxima de l'allure de niveau bidimensionnelle ($P(\theta_j, R_k^{-1})$) en tant que pics dans l'intégrale de convolution.

16. Procédé selon l'une quelconque des revendications 12 à 14, **caractérisé en ce qu'**on détermine l'allure de niveau ($P(\theta_j, R_k^{-1})$) à large bande ou de manière sélective en fréquence en tant que fonction bidimensionnelle de la valeur inverse de distance ($R_k^{-1}$) et de l'angle de relèvement ($\theta_j$), **en ce qu'**on détermine par calcul de simulation une répartition modèle bidimensionnelle ($M(\theta_j, R_k^{-1})$) pour au moins une cible, **en ce qu'**on calcule et convole la courbure de l'allure de niveau ($P(\theta_j, R_k^{-1})$) et de la répartition modèle ($M(\theta_j, R_k^{-1})$), et **en ce qu'**on détermine les maxima de l'allure de niveau bidimensionnelle ($P(\theta_j, R_k^{-1})$) en tant que pics dans l'intégrale de convolution.

17. Procédé selon la revendication 15, **caractérisé en ce que**, pour calculer la courbure, on applique l'opérateur de Laplace respectivement à l'allure de niveau ($P(\theta_j, R_k^{-1})$) et à la répartition modèle ($M(\theta_j, R_k^{-1})$).

18. Procédé selon l'une quelconque des revendications 1 à 17, **caractérisé en ce qu'**on effectue une estimation statistique de l'éloignement ($R_z$) de la cible par le fait qu'on forme la médiane des valeurs inverses de distance ($R_z^{-1}$) détectées comme éloignements de la cible, à partir d'un nombre défini de dernières mesures, et qu'on en prend la valeur inverse.

19. Procédé selon la revendication 18, **caractérisé en ce qu'**on forme un intervalle de confiance (KI) à partir de la médiane du montant de l'écart absolu de la valeur inverse de distance déterminée ($R^{-1}$) par rapport à la médiane formée lors de l'estimation de l'éloignement ($R_z$) de la cible.

20. Procédé selon l'une quelconque des revendications 1 à 17, **caractérisé en ce qu'**on effectue une estimation statistique de l'éloignement ($R_z$) de la cible par le fait qu'on forme la moyenne arithmétique des valeurs inverses de distance ($R_z^{-1}$) détectées comme éloignements de la cible, à partir d'un nombre défini de dernières mesures, et qu'on en prend la valeur inverse.

21. Procédé selon l'une quelconque des revendications 1 à 20, **caractérisé en ce qu'**on utilise un ensemble de transducteurs linéaire, par exemple une antenne remorquée (« towed array ») ou une antenne latérale (« flank array »).

22. Procédé selon l'une quelconque des revendications 1 à 21, **caractérisé en ce qu'**on obtient les temporisations pour les signaux de réception des transducteurs (11) à partir du calcul des temps de propagation ($\tau_n$) pour les distances ($x_n$) entre les transducteurs (11) et un arc de cercle, tiré autour du point focal respectif (20), dont la tangente touche le centre de l'ensemble (10) de transducteurs, conformément à l'équation suivante

$$\tau_n = \frac{x_n^2}{2c.R_k}$$

où $\dfrac{1}{R_k}$ est la valeur inverse de distance du point focal (20), et c la vitesse du son.

23. Procédé selon l'une quelconque des revendications 1 à 22, **caractérisé en ce qu'**on utilise un ensemble de transducteurs déployé en deux dimensions, par exemple une antenne en nappe.

Fig. 1

Fig. 2

Fig. 3

Fig. 4

Fig. 5

Fig. 6

Fig.7

P [dB]

$\Theta_j$ [°]

**Fig. 8**

$\Delta P + \Delta M$

$\Theta_j$ [°]

**Fig. 9**

$$(R_k - y_n)^2 + x_n^2 = R_k^2$$

$$y_n^2 - 2 R_k y_n + x_n^2 = 0$$

$$y_n = R_k - R_k \sqrt{1 - \left(\frac{x_n}{R_k}\right)^2} \qquad \text{(a)}$$

$$R_k \sqrt{1 - \left(\frac{x_n}{R_k}\right)^2} \implies \text{Potenzreihe}$$

$$= R_k \left(1 - \frac{1}{2}\left(\frac{x_n}{R_k}\right)^2 - \ldots \right)$$

$$= R_k - \frac{x_n^2}{2 R_k} \qquad \text{(b)}$$

(b) in (a)

$$\implies \qquad y_n = \frac{x_n^2}{2 R_k}$$

$$\tau_n = \frac{y_n}{c} = \frac{x_n^2}{2c R_k} \text{ für } n = 0 \text{ bis } N$$

**Fig. 10**